# EUROPÄISCHE PATENTANMELDUNG

(11) **EP 2 677 183 A1**
(43) Veröffentlichungstag der Anmeldung: **25.12.2013**
(21) Anmeldenummer: 12172850.5
(22) Anmeldetag: 21.06.2012
(51) Int. Cl.: F16C 33/50, F16C 33/56

(54) **Segment für einen Wälzlagerkäfig und Verfahren zu dessen Herstellung**

(71) Anmelder: Aktiebolaget SKF, 41 550 Göteborg (SE)
(72) Erfinder: Loemba, Anselme, 97646 Niederwerrn (DE); Eich, Bernd, 97727 Fuchsstadt (DE)
(74) Vertreter: Schonecke, Mitja

(57) **Zusammenfassung**

Ein Segment (2,3) eines Käfigs für ein Wälzlager besteht zu mehr als 50 Volumenprozent aus einem spritzgussfähigen Kunststoffmaterial und weist zumindest ein einstückiges Verstärkungselement (1) aus einen Verstärkungsmaterial auf, wobei das spritzgussfähige Kunststoffmaterial das Verstärkungselement (1) zumindest teilweise umschließt.

## Beschreibung

Ausführungsbeispiele der Erfindung befassen sich mit Wälzlagerkäfigen und dabei insbesondere mit der Gestaltung von stabilen Wälzlagerkäfigen.

Die meisten Wälzlager bestehen aus zwei Ringen, dem Innen- und dem Außenring sowie dazwischen angeordneten Rollenkörper bzw. Wälzkörpern. Wälzlager können abgedichtet oder nicht abgedichtet sein. Die Funktion der Lager wird zu einem großen Teil von den Wälzkörpern bestimmt. Langsam laufende, hochbelastete Lager können als vollrollige Lager ohne einen Lagerkäfig ausgeführt sein, um eine hohe Tragzahl zu erzielen. Häufig werden die Wälzkörper jedoch von Käfigen geführt und in gleichen Abständen gehalten, so dass eine gute Lastübertragung bzw. Lastverteilung auf die einzelnen Rollenkörper sichergestellt ist, ohne dass einander benachbarte Wälzkörper einander berühren können. Solche Käfige können aus unterschiedlichen Materialien bestehen und deren Herstellung ist kompliziert, da die Käfige eine Vielzahl von Anforderungen erfüllen müssen.

Zum einen sollen sie verschleißfest sein und gleichzeitig oft auch eine Notlaufeigenschaft aufweisen. Darüber hinaus sollen Käfige leicht sein, ohne jedoch die erforderliche Stabilität und Langlebigkeit vermissen zu lassen. Um die exakte Führung der Wälzkörper zu ermöglichen, sollen Käfige äußerst maßhaltig produziert werden, egal ob diese aus metallischen oder aus Polymerwerkstoffen bestehen. Insbesondere bei großen Lagern, d.h. für große Käfige, wird häufig zunächst anstatt eines kompletten Käfigs eine Mehrzahl von Segmenten eines Käfigs hergestellt. Dies kann dazu beitragen, die Maßhaltigkeit großer Käfige zu erhöhen, indem Effekte, die auf Materialschwund basieren, unterdrückt werden. Während in einigen Anwendungen die Segmente während der Lagermontage zu einem komplett umlaufenden Käfig verbunden werden, können in anderen Anwendungen einzelne Segmente in einem Lager auch lose aneinander anliegen und beispielsweise nur von den Wälzkörpern geführt werden. Bei großen Käfigen erhöht sich aufgrund der größeren Massenträgheit der beteiligten Bauteile die Anforderung an die mechanische Stabilität der Käfige zum Teil erheblich.

Teilweise aus Kostengründen, aber auch aufgrund vorteilhafter tribologischer und chemischer Eigenschaften wird für viele Käfige Kunststoffmaterial verwendet, wobei zur Herstellung des Käfigs oder eines Segments eines Käfigs häufig ein Spritzgussverfahren angewendet wird. Wenngleich dieses Verfahren es erlaubt, vergleichsweise komplexe Geometrien abzubilden, ist die erforderliche mechanische Stabilität der Käfigsegmente mittels Spritzgussverfahren oft nicht erreichbar oder es muss ein zu großes Volumen für das Käfigmaterial vorgesehen werden, sodass der Käfig selbst zu groß werden kann.

Es ist also Wünschenswert, ein Käfigsegment und ein Verfahren zum Herstellen eines Käfigsegments anzugeben, dass es einfach ermöglicht, robustere Käfigsegmente herstellen zu können.

Einige Ausführungsbeispiele ermöglichen dies, indem ein Verstärkungselement vorgesehen wird, das bessere mechanische Eigenschaften aufweist als ein spritzgussfähiges Kunststoffmaterial, aus dem das Käfigsegment überwiegend besteht und das diesem bei einigen Ausführungsbeispielen die Form des Käfigs gibt. Beim Herstellen eines solchen Segmentes wird zumindest ein Verstärkungselement aus einen Verstärkungsmaterial bereitgestellt, das mit einem spritzgussfähigen Kunststoffmaterial derart umspritzt wird, dass das Käfigsegment zu mehr als 50 Volumenprozent aus dem spritzgussfähigen Kunststoffmaterial besteht, welches das Verstärkungselement zumindest teilweise umschließt.

So kann zum einen die exakte Maßhaltigkeit auch bei komplexer Formgebung gewährleistet werden, die mittels Spritzgussverfahren erzielbar ist, und zum anderen kann die mechanische Stabilität erhöht werden, indem ein Verstärkungselement vorgesehen ist, dass zumindest teilweise von dem Spritzgussfähigen Material umgeben ist. Insbesondere braucht bei einigen Ausführungsbeispielen auch das Verstärkungselement selbst, dessen Material möglicherweise komplizierter zu bearbeiten ist, nicht mit besonders hoher Maßhaltigkeit gefertigt werden. So kann auf kostengünstige und effiziente Art und Weise beispielsweise eine mechanische Stabilität durch das Verstärkungsmaterial verbessert werden, während das Herstellungsverfahren nach wie vor einfach und im großindustriellen Maßstab durchgeführt werden kann.

Bei einigen Ausführungsbeispielen wird als Verstärkungselement ein einstückiges Stanzbiegeteil aus einem Metall verwendet. Dies ermöglicht es beispielsweise, zunächst mittels einer Stanze oder dergleichen aus einem Metallblech einen Rohling auszustanzen, dessen Außenkonturen den Konturen des fertigen Verstärkungselementes entsprechen. Durch beispielsweise einen einzigen weiteren Biegevorgang kann dann gemäß einigen Ausführungsbeispielen das Verstärkungselement fertig gestellt werden, welches in einem nachfolgenden Spritzgussverfahren von dem spritzgussfähigen Kunststoff umspritzt wird.

Bei einigen Ausführungsbeispielen befindet sich also im Inneren bzw. im Kern eines Segments eines Käfigs ein Verstärkungselement aus einem stabileren Material, beispielsweise aus einem Metall, um die Stabilität der Gesamtkonzeption trotz einfacher Produktion zu gewährleisten. Beispielsweise kann ein solches Verstärkungselement aus einem Blech oder einem ähnlichen Metall bestehen.

Bei einigen Ausführungsbeispielen ist das Verstärkungsmaterial des Verstärkungselements, beispielsweise also das Blech perforiert bzw. mit einer Mehrzahl von Löchern versehen, um einen Kraftschluss bzw. einen Formschluss zwischen dem angespritzten Kunststoff und dem Verstärkungselement zu erhöhen.

Es versteht sich von selbst, dass bei weiteren Ausführungsbeispielen auch andere Materialien für Verstärkungselemente verwendet werden können, um Verstärkungselemente für Käfige oder Käfigsegmente herzustellen. Insbesondere können dies beispielsweise auch andere Kunststoffe sein, wie beispielsweise PBI, das aufgrund seiner hohen Temperaturbeständigkeit zur Erhöhung der Temperaturbeständigkeit eines Käfigsegments dienen kann, in dem ein Verstärkungselement aus PBI verwendet wird.

Verstärkungselemente im Sinne dieser Erfindung beziehen sich somit also nicht lediglich auf Elemente, die die mechanische Stabilität eines Käfigsegments bzw. eines Lagerkäfigs unmittelbar erhöhen, sondern auch auf andere Elemente, die sich positiv auf eine beliebige physikalische Eigenschaft eines Käfigsegments, wie beispielsweise die Resistenz gegen Wärme, Chemikalien, Druck oder dergleichen, auswirken.

Bei einigen Ausführungsbeispielen umfasst das spritzgussfähige Kunststoffmaterial beispielsweise Polyetheretherketon (PEEK), Polyetherketon (PEK), Polyethersulfon (PES), Polyetherimid (PEI), Polyphenylensulfid (PPS) Polyamide (PA), Polyethylennaphthalat (PEN) oder Polyimid (PI), wie beispielsweise Polybenzimidazol (PBI). Bei weiteren Ausführungsbeispielen können als spritzgussfähige Kunststoffmaterialen auch Gemische bzw. "blends" dieser oder anderer Kunststoffe verwendet werden. Bei weiteren Ausführungsbeispielen werden spritzgussfähige Kunststoffmaterialen verwendet, die verstärkt sein können, also beispielsweise Fasern, Partikel oder Whisker aus einem verstärkenden Material, beispielsweise aus Glasfaser oder Kohlenstoff, aufweisen.

Insbesondere bei zunächst einzeln hergestellten Käfigsegmenten, die erst im Laufe des Montageprozesses des Lagers zu einem gesamten Käfigs komplettiert werden, finden sich häufig einzelne Käfigsegmente, die mittels Verbindungselementen untereinander, das heißt also mit anderen Käfigsegmenten, verbunden werden. Bei einigen Ausführungsbeispielen erstrecken sich die Verstärkungselemente bzw. erstreckt sich zumindest ein Verstärkungselement innerhalb eines solchen Verbindungselements, was die mechanische Stabilität der Verbindung zwischen benachbarten Käfigsegmenten signifikant erhöhen kann. Bei einigen Ausführungsbeispielen erstreckt sich also das Verstärkungselement zumindest teilweise bis in ein Verbindungselement bzw. bis in einen Verbindungssteg, um die Elastizität des Verbindungselements und die Zuverlässigkeit der Verbindung zu erhöhen.

Einige Ausführungsbeispiele der vorliegenden Erfindung werden nach folgend, bezugnehmend auf die beigefügten Figuren, näher erläutert. Es zeigen:
- Figur 1: eine Illustration von miteinander verbundenen Ausführungsbeispielen von Segmenten für Wälzlagerkäfige;
- Figur 2: eine Illustration zweier Ausführungsbeispiele von Verstärkungselementen für Segmente für Wälzlagerkäfige;
- Figur 3: eine perspektivische Ansicht eines aus mehreren Segmenten bestehenden Wälzlagerkäfigs;
- Figur 4: eine Ansicht auf einen gestanzten Rohling eines Ausführungsbeispiels eines Verstärkungselements;
- Figur 5: eine Seitenansicht eines Ausführungsbeispiels eines Verstärkungselements;
- Figur 6: eine perspektivische Ansicht des Verstärkungselements der Figur 5;
- Figur 7: eine weitere perspektivische Ansicht des Verstärkungselements der Figur 5; und
- Figur 8: ein Ausführungsbeispiel eines Verfahrens zum Herstellen eines Segments.

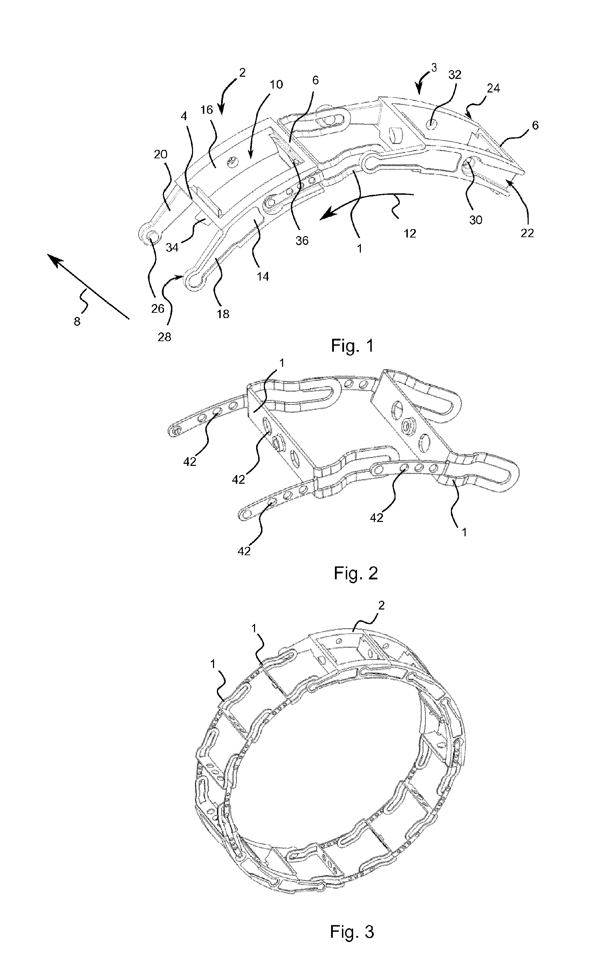

Figur 1 zeigt zwei Ausführungsbeispiele 2 und 3 eines Segments für ein Wälzlager. Zur Verdeutlichung der Funktionsweise ist zwischen den Segmenten 2 und 3 ein die beiden verbindendes Segment nur teilweise dargestellt. Um genau zu sein, wurde bei diesem Segment auf die Darstellung eines spritzgussfähigen Kunststoffmaterials verzichtet, sodass das Verstärkungselement 1, welches sonst zumindest teilweise von dem spritzgussfähigen Kunststoffmaterial umschlossen ist, sichtbar wird. Bezüglich geometrischer Details der Verstärkungselements 1 wird ergänzend auf Figur 2 verwiesen.

Das Verstärkungselement 1, das auch innerhalb der Segmente 2 und 3 angeordnet ist, erhöht die Stabilität der Segmente selbst sowie in dem vorliegend gezeigten Fall zusätzlich die Stabilität einer Verbindung, die sich durch ein gegenseitiges Verrasten zweier benachbarter Käfigsegmente auf die im Folgenden beschriebene Art ergibt. Zur Vereinfachung des Verständnisses wird zur Beschreibung einzelner Komponenten eines Segments 2 oder 3 nachfolgend jeweils auf dasjenige Segment Bezug genommen, in dem das betreffende Merkmal besser sichtbar ist.

Segment 2 umfasst einen ersten Steg 4 und einem zweiten Steg 6, welche sich jeweils in einer axialen Richtung 8 erstrecken. Als axiale Richtung 8 wird dabei der allgemeinen Terminologie folgend diejenige Richtung verstanden, die auch bei einem kompletten Lager bzw. Lagerkäfig als axiale Richtung bezeichnet wird, d.h. eine Richtung parallel zu der Rotationsachse des Lagers. Der erste Steg 4 und der zweite Steg 6 sind auf gegenüberliegenden Seiten einer Tasche 10 zur Aufnahme eines Wälzkörpers angeordnet. Um genau zu sein, sind die Stege 4 und 6 in einer Umlaufrichtung 12 auf einander gegenüberliegenden Seiten der Tasche 10 angeordnet. Als Umlaufrichtung 12 soll hier der üblichen Terminologie folgend diejenige Richtung verstanden werden, entlang derer sich der Käfig kreisförmig erstreckt, also diejenige Richtung, die in jedem Punkt tangential zum Umfang des Käfigs verläuft.

In der axialen Richtung 8 auf unterschiedlichen Seiten der Tasche 10 gegenüberliegend befinden sich ferner zwei Seitenteile 14 und 16, die jeweils mit den Stegen 4 und 6 verbunden sind. Die Seitenteile 14 und 16 sind also jeweils an einander gegenüberliegenden Seiten eines Steges mit demselben verbunden.

Das in Figur 1 dargestellte Ausführungsbeispiel weist ferner zwei sich in der Umlaufrichtung 12 erstreckende Verbindungselemente 18 und 20 auf, mittels derer das Segment 2 mit einem weiteren Segment verbunden werden kann. Wenngleich in Figur 1 ein Segment mit zwei Verbindungselementen 18 und 20 dargestellt ist, versteht es sich von selbst, dass weitere Ausführungsbeispiele lediglich ein Verbindungselement bzw. mehr als zwei Verbindungselemente aufweisen können.

Um eine Verbindung mit weiteren Segmenten zu ermöglichen, weist das Segment 2 ferner eine Aufnahme 22 für einen Verbindungselement auf, mit der ein Verbindungselement eines weiteren Segments reversibel oder irreversibel verbunden werden kann. Im vorliegenden Ausführungsbeispiel weist das Segment 2 zwei Aufnahmen 22 und 24 auf, die ausgebildet sind, um mit den dazu korrespondierenden Verbindungselementen 18 und 20 zu verrasten. Zu diesem Zweck ist eine geometrische Form der Aufnahmen 22 und 24 bzw. eine Oberflächengestaltung oder Oberflächenkontur der Aufnahmen 22 und 24 derart auf eine geometrische Form bzw. Oberflächenkontur der Verbindungselemente 18 und 20 angepasst, dass diese miteinander verrasten können. Im vorliegenden Fall haben die Verbindungselemente 18 und 20 sowie die dazu korrespondierenden Aufnahmen 22 und 24 die Form von Kegeln. Bewegt man beispielsweise Segment 3 in der Umlaufrichtung 12 relativ zu Segment 2, werden die Verbindungselemente 18 und 20 zunächst in dem durch die Kegelform bedingten, enger werdenden Spalt der Aufnahmen 22 und 24 geführt. Bei der weiteren Bewegung verformen sich die Verbindungselemente 18 und 20 elastisch. Diese elastische Verformung wird durch Rastnasen 26 bzw. 28, d.h. durch sich in oder entgegen der axialen Richtung 8 an den jeweiligen Verbindungselementen 18 und 20 erstreckende Erhebungen, bewirkt. Die Rastnasen 26 und 28 gleiten die Oberflächenkontur der Aufnahmen 22 und 24 entlang, wodurch die Verbindungseinrichtungen 18 und 20 elastisch deformiert werden. Die Verwendung der Kegelform führt dazu, dass eine elastische Deformation erst spät während des Verrastens erfolgt, was die Beanspruchung des Materials verglichen mit anderen möglichen Formgebungen reduzieren kann.

Am Ende der Bewegung, also an einer Endposition, greifen die Rastnasen 26 und 28 in zu den Rastnasen korrespondierende Bohrungen 30 und 32 der Aufnahmen 22 und 24 ein. Dies ermöglicht es den Verbindungselementen 18 und 20 in eine unbelastete Ruhelage zurückzukehren, in welcher die Verbindungselemente 18 und 20 mit den Aufnahmen 22 und 24 verrastet sind. Durch die Verrastung der Rastnasen 26 und 28 mit den Bohrungen 30 und 32 wird eine weitere Relativbewegung der beiden Segmentteile in oder entgegen der Umlaufrichtung 12 verhindert. Zusätzlich wird durch die Gestaltung der Oberflächenkontur der Verbindungselemente 18 und 20, insbesondere durch die an deren Enden angebrachten zylindrischen Abschnitte, deren Durchmesser größer ist als der Durchmesser des daran anschließenden Teils des Verbindungselements 18, eine solche Bewegung zusätzlich verhindert.

Ferner wird durch die Gestaltung bzw. die gegenseitige Anpassung der Oberflächenkontur der Verbindungselemente 18 und 20 und der Aufnahmen 22 und 24 eine Relativbewegung zweier Segmente sowohl in der axialen als auch in der radialen Richtung verhindert. In der Endposition sind also zwei benachbarte Segmente 2 und 3 derart miteinander verbunden bzw. verrastet, dass eine Relativbewegung in keiner Richtung mehr möglich ist. Um eine Stabilität der Verbindung bzw. eine Genauigkeit der Positionierung zwischen zwei benachbarten Segmenten weiter zu erhöhen, weist das in Figur 1 dargestellte Ausführungsbeispiel an dem ersten Steg 4 ferner ein Fixierelement 34 auf, das sich in der Umlaufrichtung 12 in Form eines zylindrischen Bolzens von dem Segment 3 erstreckt.

Dazu korrespondierend weist das Segment 2 am zweiten Steg 6 eine Aufnahme 36 für das Fixierelement 34 auf, vorliegend in Form einer zylindrischen Bohrung. Mittels des Fixierelements kann bei einigen Ausführungsbeispielen die Relativposition zweier benachbarter Segmente 2 und 3 noch genauer festgelegt werden. Es versteht sich von selbst, dass bei weiteren Ausführungsbeispielen die Geometrie des Fixierelements 34 bzw. der dem Fixierelement 34 zugeordneten Aufnahme 36 anders gestaltet sein kann, wobei die Oberflächenkonturen des Fixierelements 34 und Aufnahmevorrichtung 36 derart aufeinander abgestimmt sind, dass eine exakte Positionierung der beiden Segmente 2 und 3 relativ zueinander erreicht wird. Beispielsweise können sich in der Umlaufrichtung erstreckende Nasen quaderförmig, ellipsoid, kegelförmig, kugelförmig usw. sein. Bei weiteren Ausführungsbeispielen kann die das Fixierelement 34 zusammen mit der Aufnahmevorrichtung 36 für das Fixierelement ferner eine Rastfunktion aufweisen.

Bei dem dargestellten Ausführungsbeispielen erfolgt die Verbindung zweier benachbarter Segmente in Form einer Verrastung und unter Ausnutzung der Flexibilität des verwendeten Materials des Segmentes. D.h., bei einigen Ausführungsbeispielen wird beim Verbinden benachbarter Segmente das Verbindungselement oder die Aufnahme elastisch aus seiner unbelasteten Ruhelage verformt, bis dieses in eine Endposition schnappt bzw. rastet, in der sich das Verbindungselement innerhalb der Aufnahme befindet bzw. mit diesem verbunden ist. In der Endposition wird durch das Zusammenwirken des Verbindungselements und der Aufnahme verhindert, dass sich die so verbundenen benachbarten Segmente in der Umlaufrichtung relativ zueinander bewegen können. Bei einigen Ausführungsbeispielen verhindert ein Formschluss zwischen beiden Elementen eine solche Bewegung.

Wie anhand von den Figuren 1 und 2 gezeigt, ist das Verstärkungselement 1 zumindest teilweise von einem spritzgussfähigen Kunststoff umgeben, welcher die geometrische Form des Segments bestimmt. Vorliegend handelt es sich bei dem Verstärkungselement 1 um ein gestanztes Blech, dass von dem Kunststoffmaterial, das zur Herstellung des Segments verwendet wird, umspritzt ist. Ein Anteil des Kunststoffs kann bei einigen Ausführungsbeispielen mehr als 50, bei weiteren Ausführungsbeispielen mehr als 70 oder mehr als 90 Volumenprozent betragen.

Bei dem in Figur 1 dargestellten Ausführungsbeispiel erstreckt sich das Verstärkungselement 1 aus Blech in die Verbindungselemente 18 und 20, was zum einen die Stabilität bei der elastischen Deformation erhöht und zum anderen dafür sorgen kann, dass die Stabilität der Verbindung zwischen benachbarten Segmenten erhöht werden kann, da ungewolltes Lösen der Verrastung erschwert wird, wenn das Verstärkungsmaterial eine ungewollte elastische Deformation zusätzlich hemmt. Bei dem in Figur 2 dargestellten Ausführungsbeispiel erstreckt sich der zur Verstärkung genutzte Blechstreifen zusätzlich bis zu der Aufnahme 22 bzw. über die Bohrungen 30 und 32, in die die Rastnasen 26 und 28 eingreifen, hinaus. So ist näherungsweise entlang des gesamten Umfangs eines vollständig zusammengebaut Lagerkäfigs, wie er beispielhaft in der Figur 3 dargestellt ist, Verstärkungsblech innerhalb der Kunststoffspritzgussteile angeordnet, was zusätzlich die Stabilität des Käfigs erhöht.

Bei einigen Ausführungsbeispielen ist ein zur Verstärkung verwendetes Blech bzw. metallisches Material perforiert bzw. an vorbestimmten Positionen mit Löchern 42 gleichen oder unterschiedlichen Durchmessers versehen, was dazu beitragen kann, die Verbindung des Spritzgussmaterials mit dem Verstärkungselement bzw. dem Verstärkungsmaterial in dessen Kern zu verbessern.

Bei dem in Figur 1 dargestellt Ausführungsbeispielen wird also zur weiteren Verstärkung ein ausgestanztes und verformtes Blech in den Käfig mit abgespritzt, um die Festigkeit gesamten Käfigs zu erhöhen. Dabei sind Form und Material des Käfigs beliebig.

Mit anderen Worten umfasst das in Figur 1 dargestellte Segment 2 eine klassische Käfigtasche 10, die mit gabelförmigem Vorderteil (Verbindungselement 18 und 20) abgespritzt ist. Dieser Vorderteil erlaubt eine Schnappverbindung zwischen zwei miteinander verbundenen Segmenten. Durch das Aufschieben einzelner Segmente in Umfangsrichtung 12 gleiten die Säulen mit ihren Nasen (kleine Stifte) auf einer kegelförmigen Schiene (dem Hinterteil der Vorrichtung) des vorderen Segments entlang und weichen dabei ein wenig aus, bis sie Positionierungslöcher bzw. Bohrungen 30 und 32 erreichen. Während der Bewegung bleiben die Säulen bzw. die Verbindungselemente 18 und 20 innerhalb ihres elastischen Eigenschaftsbereichs.

Die Führung bzw. die Geometrie der Aufnahmen 22 und 24 und der Säulen bzw. der Verbindungselemente 18 und 20 und die zentralen Positionierungsstifte (der Rastnasen 26 und 28) erlauben eine stabile Positionierung der miteinander verbundenen Segmente in axialer und radialer Richtung. Durch die Fixierung der einzelnen Segmente wird auch die Stabilisierung eines Gesamtkäfigs gewährleistet. Zusätzlich ist jedes Segment einzeln austausch- und ersetzbar.

Bei dem in Fig. 1 dargestellten Ausführungsbeispielen bilden die Segmente 2 und 3 jeweils eine komplette Käfigtasche, d.h., das Segmente weisen zwei sich in der Umlaufrichtung 12 auf gegenüberliegenden Seiten einer Tasche 10 für einen Wälzkörper befindliche, in axialer Richtung verlaufende Stege 4 und 6 auf, zwischen denen der Wälzkörper geführt werden kann. Bei weiteren Ausführungsbeispielen können die Segmente jedoch beliebige andere Geometrien aufweisen und beispielsweise eine Tasche für einen Wälzkörper 10 erst in Verbindung mit einem benachbarten Segment formen.

Auch können bei weiteren Ausführungsbeispielen beliebige andere Geometrien von Verstärkungselementen 1 verwendet werden. Insbesondere kann bei weiteren Ausführungsbeispielen ein Verstärkungselement 1 die gesamte Tasche 10 umschließen. Bei weiteren Ausführungsbeispielen können mehrere einzelne Verstärkungselemente in einem Segment angeordnet sein, beispielsweise an den jeweils mechanisch am stärksten beanspruchten Stellen.

Die Figur 3 zeigt der Vollständigkeit halber einen kompletten Käfig, der aus den in den vorhergehenden Figuren gezeigten Ausführungsbeispielen von Segmenten besteht.

Da bei diesen Ausführungsbeispielen die Verrastungen zwischen benachbarten Segmenten reversibel bzw. wieder zerstörungsfrei lösbar sind, können im Schadensfall lediglich einzelnen Segmente ausgetauscht werden.

Es versteht sich von selbst, dass bei weiteren Ausführungsbeispielen die Verbindung irreversibel, also nicht zerstörungsfrei lösbar sein kann, so dass die sich in der Umfangrichtung erstreckenden Verbindungselemente mit den dazu korrespondierenden Aufnahmen beispielsweise durch Verpressen, Verklebten oder dergleichen verbinden werden können. Allgemein gesprochen kann die Verbindung auf jedwede Art und Weise kraft-, form- oder stoffschlüssig erfolgen.

Bei weiteren Ausführungsbeispielen kann sich die Geometrie der Verbindungselemente von den vorstehend beschriebenen Geometrien selbstverständlich auch unterscheiden, sofern die Verbindungseinrichtung und die dazu korrespondierende Aufnahme eine derartige Gestalt aufweisen, dass durch verbinden oder zusammenfügen der beiden Komponenten eine lösbare oder eine unlösbare Verbindung entsteht, die benachbarte Segmente relativ zueinander fixiert. Beispielsweise können alternative Verbindungselemente quaderförmig, zylindrisch, oder kegelförmig sein und beliebige kompliziertere Formen aufweisen.

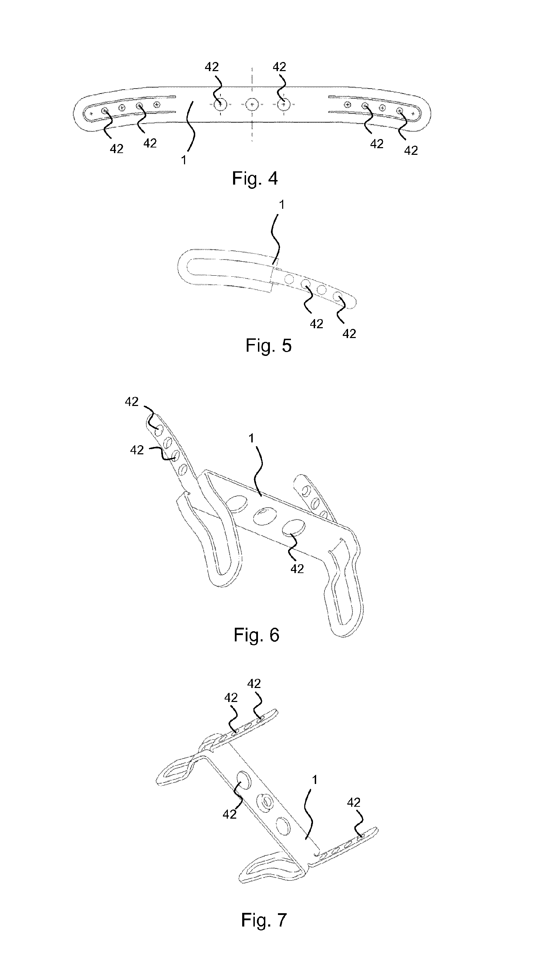

Die Figuren 4 bis 7 illustrieren schematisch ein Ausführungsbeispiel eines Verstärkungselements 1 während der Herstellung bzw. die Herstellung desselben. Das Verstärkungselement 1 kann als einstückiges Stanzbiegeteil ausgebildet sein, das mit wenigen Produktionsschritten kostengünstig und effizient hergestellt werden kann. In der in Figur 4 gezeigten Ansicht ist das gestanzte Blech, also ein Rohling, des Verstärkungselements 1 nach dem Stanzen gezeigt, bei dem die Kontur und die Perforationen bzw. die erforderlichen Ausnehmungen 42 des Verstärkungselements 1 festgelegt werden. Nach dem Stanzen kann das Verstärkungselement 1 durch einfaches Biegen schnell und kostengünstig in die in den Figuren 5 bis 7 dargestellte Form gebracht werden. Wie aus der Seitenansicht von Figur 5 ersichtlich ist, kann dabei insbesondere ohne großen Aufwand auch der erforderliche Radius des Verstärkungselements 1 erhalten werden, sodass sich dieses innerhalb des Segments 2 oder 3 entlang der Umlaufrichtung 12 erstrecken kann.

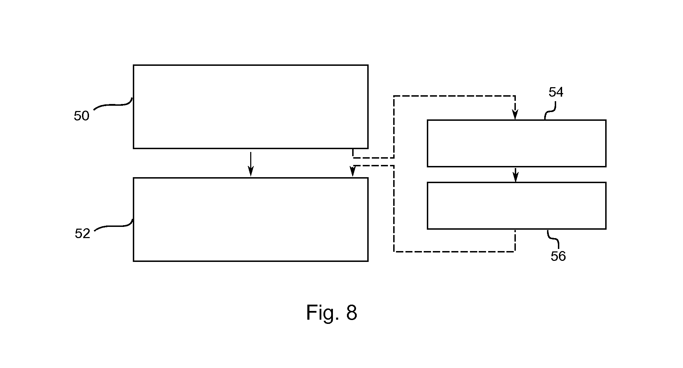

Figur 8 illustriert schematisch ein Ausführungsbeispiel für ein Verfahren zum Herstellen eines Segments eines Käfigs für ein Wälzlager.

Dabei wird zunächst in einem Bereitstellungsschritt 50 zumindest ein Verstärkungselement 1 aus einem Verstärkungsmaterial bereitgestellt.

In einem Spritzgussschritt 52 wird das Verstärkungselement 1 derart mit einem spritzgussfähigen Kunststoffmaterial umspritzt, dass das spritzgussfähige Kunststoffmaterial das Verstärkungsmaterial zumindest teilweise umschließt.

In Fig. 8 ist ferner ein alternatives Ausführungsbeispiel dargestellt, bei dem das Verstärkungselement 1 optional selbst hergestellt werden kann.

Dazu kann in einem Stanzschritt 54 ein Blech mit einer der Kontur des Verstärkungselementes entsprechenden Kontur ausgestanzt oder bereitgestellt bzw. auf andere Art erzeugt werden.

In einem darauffolgenden Biegeschritt 56 kann das Blech gebogen werden, um das Verstärkungselement zu erhalten.

Im vorhergehenden Ausführungsbeispiel und in diesem Dokument ist der Begriff stanzen so zu verstehen, dass ein 2-dimensionaler Rohling eines Verstärkungselements auf jedwede mögliche Art und Weise erzeugt wird, was bei erhöhten Anforderungen an die Genauigkeit beispielsweise auch durch Laserschneiden, Wasserstrahlschneiden oder Drahterodieren erfolgen kann.

Ferner können selbstverständlich auch komplette Käfige mit in diesen enthaltenen Verstärkungselementen in einem Spritzgussschritt hergestellt werden.

### Bezugszeichenliste

- 1: Verstärkungselement
- 2: Segment
- 3: Segment
- 4: Steg
- 6: zweiter Steg
- 8: axiale Richtung
- 10: Tasche
- 12: Umlaufrichtung
- 14: Seitenteil
- 16: Seitenteil
- 18: Verbindungselement
- 20: Verbindungselement
- 22: Aufnahme
- 24: Aufnahme
- 26: Rastnase
- 28: Rastnase
- 30: Bohrung
- 32: Bohrung
- 34: Fixierelement
- 36: Aufnahme für Fixierelement
- 42: Löcher

- 50: Bereitstellungsschritt
- 52: Spritzgussschritt
- 54: Stanzschritt
- 56: Biegeschritt

## Patentansprüche

1. Segment (2,3) eines Käfigs für ein Wälzlager, mit folgenden Merkmalen:
zumindest einem einstückigen Verstärkungselement (1) aus einem Verstärkungsmaterial; und
einem zu mehr als 50 Volumenprozent aus einem spritzgussfähigen Kunststoffmaterial bestehenden Segmentkörper, wobei das spritzgussfähige Kunststoffmaterial das Verstärkungselement (1) zumindest teilweise umschließt; und
zumindest ein sich in einer Umlaufrichtung (12) erstreckendes Verbindungselement (18) zum Verbinden des Segments (2,3) mit einem weiteren Segment (2,3) des Wälzlagerkäfigs, wobei
sich das Verstärkungselement (1) zumindest teilweise in das Verbindungselement (18) erstreckt.

2. Segment (2, 3) nach Anspruch 1, bei dem das spritzgussfähige Kunststoffmaterial das Verstärkungselement (1) vollständig umschließt.

3. Segment (2, 3) nach Anspruch 2 oder 3, bei dem das Verstärkungselement (1) eine Mehrzahl von sich durch das Verstärkungselement (1) erstreckende Bohrungen (42) aufweist, in die sich das spritzgussfähige Kunststoffmaterial zumindest teilweise erstreckt.

4. Segment (2, 3) nach einem der vorhergehenden Ansprüche, bei dem das Verstärkungselement (1) aus einem Metall besteht und bevorzugt als einstückiges Stanzbiegeteil ausgebildet ist.

5. Segment (2, 3) nach einem der vorhergehenden Ansprüche, bei dem das spritzgussfähige Kunststoffmaterial zumindest eines der folgenden Materialien umfasst: Polyetheretherketon (PEEK), Polyetherketon (PEK), Polyethersulfon (PES), Polyetherimid (PEI), Polyphenylensulfid (PPS), Polyamide (PA), Polyethylennaphthalat (PEN) oder Polyimid (PI), wie beispielsweise Polybenzimidazol (PBI).

6. Segment (2, 3) nach einem der vorhergehenden Ansprüche, bei dem das spritzgussfähige Kunststoffmaterial mittels Fasern, Partikeln oder Whiskern aus einem verstärkenden Material versetzt ist, insbesondere mit Glasfaser oder Kohlenstoff.

7. Verfahren zum Herstellen eines Segments (2,3) eines Käfigs für ein Wälzlager nach Anspruch 1, umfassend:
Bereitstellen (50) zumindest eines Verstärkungselements (40) aus einen Verstärkungsmaterial; und
Umspritzen (52) des Verstärkungselements mit einem spritzgussfähigen Kunststoffmaterial derart, dass das spritzgussfähige Kunststoffmaterial das Verstärkungsmaterial zumindest teilweise an einem sich in einer Umlaufrichtung (12) erstreckenden Verbindungselement (18) zum Verbinden des Segments (2,3) mit einem weiteren Segment (2,3) des Wälzlagerkäfigs umschließt.

8. Verfahren gemäß Anspruch 7, bei dem das Bereitstellen des Verstärkungselements folgende Schritte umfasst:
bereitstellen (52) oder erzeugen eines Bleches mit einer der Kontur des Verstärkungselementes entsprechenden Kontor.
Biegen (54) des Bleches, um das Verstärkungselement zu erhalten.
